# EUROPÄISCHE PATENTSCHRIFT

(11) **EP 3 964 457 B1**
(45) Veröffentlichungstag und Bekanntmachung des Hinweises auf die Patenterteilung: **21.08.2024**
(21) Anmeldenummer: 21194653.8
(22) Anmeldetag: 02.09.2021
(51) Int. Cl.: B65G 17/20, B65G 19/02

(54) **VORRICHTUNG ZUM TRANSPORT VON AN TRÄGERN HÄNGENDEN TEXTILEN GEGENSTÄNDEN, VORZUGSWEISE BEKLEIDUNGSSTÜCKEN**
EQUIPMENT FOR TRANSPORTING TEXTILE ARTICLES HANGING ON SUPPORTS, PREFERABLY ITEMS OF CLOTHING
DISPOSITIF DE TRANSPORT DES OBJETS TEXTILES SUSPENDUS À DES SUPPORTS, DE PRÉFÉRENCE VÊTEMENTS

(30) Priorität: 08.09.2020 DE 102020123445
(43) Veröffentlichungstag der Anmeldung: 09.03.2022
(60) Teilanmeldung: 22165858.6
(73) Patentinhaber: Herbert Kannegiesser GmbH, 32602 Vlotho (DE)
(72) Erfinder: Heinz, Engelbert, 32602 Vlotho (DE); Wirth, Alexander, 86807 Buchloe (DE); Göbbels, Peter, 86438 Kissing (DE)
(74) Vertreter: Hoener, Matthias

(56) Entgegenhaltungen:
- WO-A1-99/59903
- CN-U- 208 814 034
- DE-A1- 102014 105 767
- DE-U1- 9 202 325

## Beschreibung

Die Erfindung betrifft eine Vorrichtung zum Transport von an Trägern hängenden textilen Gegenständen gemäß dem Oberbegriff des Anspruchs 1.

Vor allem in gewerblichen Wäschereien werden textile Gegenstände wie zum Beispiel Bekleidungsstücke an Trägern hängend an Förderstrecken entlangtransportiert. Dabei werden die textilen Gegenstände beispielsweise zu Wäschebehandlungseinrichtungen transportiert, von Wäschebehandlungseinrichtungen wegtransportiert und/oder von einer Wäschereimaschine zur nächsten transportiert.

Bekannte Vorrichtungen dieser Art verfügen über mindestens einen Tragstrang und mindestens einen diesem zugeordneten Förderstrang. Am Tragstrang hängen die Träger mit und/oder ohne die textilen Gegenstände. Am Förderstrang sind mehrere voneinander beabstandete Mitnehmer angeordnet. Der Förderstrang weist einen Antrieb auf. Vom Förderstrang sind die Mitnehmer in Transportrichtung weiterbewegbar, wobei durch ein gezieltes Ankoppeln der Mitnehmer an bestimmte Träger diese Träger in Transportrichtung am Tragstrang entlangbewegbar sind.

Der jeweilige Förderstrang verfügt üblicherweise über eine Förderkette, an der die Mitnehmer schwenkbar gelagert sind, um gezielt an bestimmte Träger angekoppelt werden zu können. An Speicherstrecken mit einer Vielzahl dicht aufeinanderfolgender Träger laufen die Mitnehmer über die vorderen Träger hinweg. Die geschilderte Betriebsweise führt bei den bekannten Vorrichtungen zu einer hohen Geräuschentwicklung.

Aus der DE 92 02 325 U1 ist ein Schleppkreisförderer bekannt, der die Merkmale des Oberbegriffs des Anspruchs 1 aufweist. Dieser dient zum Weiterbewegen von Laufwerken auf einem einen als ein Schienenprofil ausgebildeten Tragstrang. Der bekannte Schleppkreisförderer weist einen umlaufend antreibbaren Förderstrang auf, woran beabstandete Halterungen angeordnet sind, die verschwenkbare Mitnehmer tragen. Am freien Ende jedes Mitnehmers ist eine frei drehbare Gummiwalze angeordnet, die an einer Kappe des Laufwerks angreifen kann, um dieses längs des Schienenprofils weiterzubewegen. Bei diesem bekannten Schleppkreisförderer ist die Halterung mit einer elastischen Zwischenschicht versehen.

Der Erfindung liegt die Aufgabe zugrunde, eine Vorrichtung zum Transport von an Trägern hängenden textilen Gegenständen, vorzugsweise Bekleidungsstücken, zu schaffen, die weniger Geräusche als bekannte Vorrichtungen erzeugt und einfach montierbar ist.

Eine Vorrichtung zur Lösung der Aufgabe weist die Merkmale des Anspruchs 1 auf. Bei dieser Vorrichtung ist es vorgesehen, die Mitnehmer und/oder ihre Mitnehmerkörper aus mehreren, vorzugsweise zwei, Mitnehmerteilen zu bilden und diese Mitnehmerteile durch mindestens eine dämpfende Naht zu verbinden. Die dämpfende Naht dient vorzugsweise dazu, Schall und/oder Schwingungen zu dämpfen. Infolge der dämpfenden Naht kommt es in akustischer und schwingungstechnischer Hinsicht zu einer Trennung des jeweiligen Mitnehmers, wodurch Geräusche, vor allem Schwingungen und/oder Schall, nicht vom jeweiligen Förderstrang auf den ihm zugeordneten Tragstrang und umgekehrt übertragen werden. Dadurch wird die Geräuschentwicklung der Vorrichtung wirksam verringert. Bevorzugt ist es vorgesehen, dass jedes Mitnehmerteil eine Dicke aufweist, die der Dicke des Mitnehmers entspricht. Beide Mitnehmerteile sind etwa gleich dick. Dadurch kann sich die jeweilige dämpfende Naht über die gesamte Dicke des Mitnehmers erstrecken. Das führt zu einer zuverlässigen Verbindung der Mitnehmerteile durch die dämpfende Naht. Außerdem kann eine über die gesamte Dicke des jeweiligen Mitnehmers und seiner Mitnehmerteile durchgehende dämpfende Naht eine möglichst große Kontaktfläche zu den zu verbindenden Mitnehmerteilen aufweisen. Auch kann die mindestens eine dämpfende Naht über eine möglichst große Querschnittsfläche verfügen, wodurch das Material der mindestens einen dämpfenden Naht über eine recht große Masse verfügt und dadurch gute Dämpfungseigenschaften erzielbar sind, die zu einer deutlichen Geräuschreduzierung führen.

Infolge der gleich dicken Mitnehmerteile und der gleich dicken mindestens einen dämpfenden Naht sind die Deckflächen, vorzugsweise Vorder- und Rückseiten des Mitnehmerkörpers, flächenbündig.

Bei einer vorteilhaften Ausgestaltung der Vorrichtung ist es vorgesehen, dass beidseitig die oder die jeweilige Naht begrenzende Ränder der Mitnehmerteile einen solchen, vorzugsweise gleichartigen, Verlauf aufweisen, der zu einem durchgehenden, ununterbrochenen Spalt zwischen benachbarten Mitnehmerteilen führt, der durch die jeweilige dämpfende Naht ausfüllbar ist. Vorzugsweise ist der Querschnitt der dämpfenden Naht über ihre gesamte Länge gleich. So lassen sich die Mitnehmerteile einfach und wirksam verbinden, indem durch das Material der mindestens einen dämpfenden Naht der Spalt zwischen den benachbarten Rändern der Mitnehmerteile von der dämpfenden Naht ausgefüllt wird, vorzugsweise vollständig ausgefüllt wird. Dabei kommt es zu einer wirksamen dämpfenden Verbindung der Mitnehmerteile. Durch die mindestens eine dämpfende Naht behalten die Mitnehmerteile nach ihrer Verbindung in akustischer Hinsicht mindestens größtenteils ihre Eigenständigkeit bei, indem durch die mindestens eine dämpfende Naht zwar mechanisch die Mitnehmerteile verbunden sind, akustisch aber mindestens größtenteils getrennt bleiben. Die mindestens eine dämpfende Naht im Spalt zwischen den von ihr verbundenen Mitnehmerteilen verhindert so Schall- und/oder Geräuschbrücken, und zwar vor allem zwischen den Trag- und Fördersträngen.

Bevorzugt ist es weiterhin vorgesehen, dass die vorzugsweise einzige dämpfende Naht und/oder der Spalt sich durchgehend zwischen benachbarten Rändern zweier Mitnehmerteile des jeweiligen Mitnehmers erstrecken. Dadurch sind nicht nur die Mitnehmerteile vollständig voneinander getrennt durch den Spalt zwischen denselben; vielmehr erstreckt sich die mindestens eine dämpfende Naht zur Verbindung der Mitnehmerteile ununterbrochen und durchgehend über die gesamte Länge des Spalts. Weil der Spalt sich durchgehend zwischen zwei unterschiedlichen, vorzugsweise gegenüberliegenden Rändern und/oder Ecken des Mitnehmers erstreckt, erhält die jeweilige dämpfende Naht, vorzugsweise einzige dämpfende Naht, eine maximal mögliche Länge, wodurch die dämpfende Naht eine maximale schallreduzierende Wirkung entfalten kann.

Eine vorteilhafte Weiterbildungsmöglichkeit der Vorrichtung sieht es vor, dass die oder die jeweilige, vorzugsweise einzige, Naht des jeweiligen Mitnehmers und/oder der durch die jeweilige Naht auszufüllende Spalt zwischen den Mitnehmerteilen einen geschlängelten, labyrinthartigen und/oder mäanderartigen Verlauf aufweist. Das führt zu einer Vergrößerung der Länge der jeweiligen dämpfenden Naht. Durch diese Verlängerung kann die jeweilige dämpfende Naht bessere schalldämpfende und/oder geräuschreduzierende Eigenschaften herbeiführen. Das gilt insbesondere dann, wenn gemäß einer besonders vorteilhaften Ausgestaltungsmöglichkeit der Vorrichtung der jeweilige Spalt durch die mindestens eine dämpfende Naht mindestens größtenteils, vorzugsweise vollständig, ausgefüllt ist.

Eine andere vorteilhafte Ausgestaltungsmöglichkeit der Vorrichtung sieht es vor, die mindestens eine dämpfende Naht aus einem Elastomer zu bilden. Vorzugsweise handelt es sich beim Elastomer um ein solches, das weicher ist als das Material der Mitnehmerteile. Bevorzugt sind die Mitnehmerteile gleichermaßen aus einem thermoplastischen Kunststoff, insbesondere Polyamid, gebildet.

Beim Elastomer der mindestens einen dämpfenden Naht handelt es sich vorzugsweise um ein thermoplastisches Elastomer. Dadurch ist es möglich, nicht nur die Mitnehmerteile des Mitnehmers im Spritzgussverfahren herzustellen, sondern auch im sogenannten Zweikomponentenspritzguss, die mindestens eine dämpfende Naht im Spritzgussverfahren herzustellen, wobei es während der Herstellung der mindestens einen dämpfenden Naht im Spritzgussverfahren zur Verbindung der Mitnehmerteile kommt. Diese Verbindung entsteht dadurch, dass nach dem zuvor erfolgten Spritzen der Mitnehmerteile beim nachträglichen Spritzen der mindestens einen dämpfenden Naht durch das zum Spritzgießen durch thermische Erwärmung fließfähig gemachten Material der mindestens einen dämpfenden Naht der mindestens eine Spalt zwischen den zu verbindenden Mitnehmerteilen ausgefüllt wird, insbesondere ausgegossen wird, und beim Abkühlen und Verfestigen des Materials der mindestens einen dämpfenden Naht das Material derselben mit den den Spalt begrenzenden Randflächen beider Mitnehmerteile verklebt. Es kommt dadurch zu einer mit einer Schweißverbindung vergleichbaren zuverlässigen und dauerhaften Verbindung der Mitnehmerteile durch die mindestens eine dämpfende Naht, wobei ein einstückiger Mitnehmerkörper des jeweiligen Mitnehmers aus den Mitnehmerteilen und die mindestens eine zur Verbindung derselben dienende dämpfende Naht gebildet wird. Die dämpfende Naht hat dadurch eine Mehrfachfunktion. Sie dient nicht nur zur Verbindung der Mitnehmerteile, sondern auch zur Geräusch- und Schalldämmung. Insbesondere werden so Laufgeräusche über die Mitnehmer nicht oder zumindest reduziert vom Förderstrang auf den Tragstrang (und umgekehrt) übertragen. Statt dessen schafft die mindestens eine durchgehende dämpfende Naht aus einem Elastomer zwischen den Mitnehmerteilen jedes Mitnehmers bzw. Mitnehmerkörpers eine schwingungstechnische und/oder akustische Barriere zwischen dem Tragstrang und dem Förderstrang und verringert so die Bildung von Schallbrücken zwischen beiden. Das verringert das Laufgeräusch der Vorrichtung.

Eine bevorzugte Weiterbildung der Vorrichtung zeichnet sich durch eine rastende Befestigung der Mitnehmer an Tragbolzen des jeweiligen Förderstrangs aus. Dadurch ist eine leichte Verbindung der Mitnehmer mit dem wenigstens einen Förderstrang gegeben. Bevorzugt erfolgt eine rastende Verbindung der Mitnehmer mit dem Förderstrang durch Aufstecken jedes Mitnehmers auf mindestens einen Tragbolzen am Förderstrang in Richtung quer zur Längsmittelachse des mindestens einen Tragbolzens. Infolge des rastenden Aufsteckens der Mitnehmer auf ihre Tragbolzen, insbesondere ein quergerichtetes Aufstecken der Mitnehmer auf ihre Tragbolzen, sind die Mitnehmer kraft- und/oder formschlüssig auf ihren Tragbolzen fixiert.

Weiter bevorzugt ist der Mitnehmer mit mindestens einem einseitig offenen Schlitz versehen. Der mindestens eine einseitig offene Schlitz verfügt über einen vom offenen Ende ausgehenden Anfangsabschnitt, der schmaler als der Durchmesser des ihm zugeordneten Tragbolzens ist. Insbesondere ist der Anfangsbereich des Schlitzes nur wenig schmaler als der Durchmesser des ihm zugeordneten Tragbolzens, und zwar solchermaßen, dass der jeweilige Schlitz unter elastischer Aufweitung rastend auf dem ihm zugeordneten Tragbolzen des Förderstrangs aufsteckbar ist. Dadurch ist eine einfache werkzeuglose Verbindung des jeweiligen Mitnehmers mit dem ihm zugeordneten Tragbolzen des Förderstrangs möglich, wobei durch den schmaleren Anfangsabschnitt der jeweilige Mitnehmer während des Betriebs der Vorrichtung auf dem ihm zugeordneten Tragbolzen zuverlässig gehalten bleibt, ohne sich selbsttätig vom Tragbolzen lösen zu können.

Eine vorteilhafte Weiterbildungsmöglichkeit jedes Mitnehmers bzw. seines Mitnehmerkörpers, insbesondere des einzigen oder des jeweiligen Schlitzes in demselben, sieht es vor, dass ein sich an den schmaleren Anfangsabschnitt anschließender, endseitig geschlossener Endbereich des mindestens einen Schlitzes breiter ist als der Anfangsabschnitt. Bevorzugt weist der Endbereich eine solchermaßen größere Breite als der Anfangsabschnitt auf, die geringfügig größer ist als der Durchmesser des ihm zugeordneten Tragbolzens. Dadurch ist jeder Mitnehmer bei sich mit seinem Endbereich auf dem Tragbolzen befindlichen Schlitzes um den Tragbolzen verdrehbar und/oder auf dem Tragbolzen im Bereich des Endbereichs des jeweiligen Schlitzes verschiebbar. Dadurch kann der jeweilige Mitnehmer um seinen mindestens einen Tragbolzen am Förderstrang frei, vorzugsweise im Wesentlichen spielfrei, verdreht werden. Falls - was bevorzugt ist - jeder Mitnehmer mit zwei beabstandeten parallelen Tragbolzen am Förderstrang gehalten und/oder gelagert ist, gewährleistet die Verschiebbarkeit mindestens eines Schlitzes gegenüber dem ihm zugeordneten Tragbolzen des Förderstrangs auch eine freie Verschwenkbarkeit des jeweiligen Mitnehmers, wobei jedoch der Schwenkwinkel durch die beiden jeweils auf einen Tragbolzen aufgesteckten Schlitze des Mitnehmers begrenzt ist.

Gemäß einer bevorzugten Weiterbildung der zuvor beschriebenen Vorrichtung ist es vorgesehen, die vorzugsweise einzige Feder zum Verschwenken des jeweiligen Mitnehmers in eine Richtung, vorzugsweise in Richtung zum Tragstrang und/oder die darauf aufgehängten Träger, in jeweils einen seitlich offenen Schlitz im jeweiligen Mitnehmer bzw. Mitnehmerkörper steckbar auszubilden. Zusätzlich ist die jeweilige Feder im Schlitz durch eine thermische Verformung mindestens einer Materialanhäufung und/oder mindestens eine Wulst im Bereich des Schlitzes, vorzugsweise am Rand des Schlitzes, form- und/oder kraftschlüssig fixiert. Dadurch ist eine einfache, aber zuverlässig fixierte Verbindung der Feder mit dem jeweiligen Mitnehmer bzw. seinem Mitnehmerkörper gewährleistet.

Insbesondere ist es vorgesehen, die jeweilige Feder als eine Blattfeder auszubilden. Die Blattfeder weist an einem in den Schlitz des Mitnehmers eingesteckten Ende einen abgewinkelten Endbereich auf. Dieser Endbereich verhindert ein Herausziehen des sich im Schlitz des Mitnehmers befindlichen Endbereichs der Blattfeder aus dem Schlitz. Dadurch wird die Blattfeder mit ihrem dem jeweiligen Mitnehmer zugeordneten Endbereich in Längs- und Querrichtung des die Blattfeder mit ihrem Endbereich aufnehmenden Schlitzes im und am Mitnehmer, insbesondere seinem Mitnehmerkörper, gesichert.

Ein bevorzugtes Ausführungsbeispiel einer Vorrichtung gemäß der Erfindung wird nachfolgend anhand der Zeichnung näher erläutert. In dieser zeigen:
- Fig. 1: eine Draufsicht auf mehrere Arbeitsstationen, die durch die Förderstrecke der Vorrichtung verkettet sind,
- Fig. 2: eine Draufsicht auf einen Förderstreckenabschnitt der Förderstrecke der Fig. 1,
- Fig. 3: eine Seitenansicht eines Teils des Förderstreckenabschnitts der Fig. 2,
- Fig. 4: zwei noch getrennte Mitnehmerteile eines Mitnehmerkörpers des Mitnehmers,
- Fig. 5: die zur Verbindung miteinander zusammengesetzten Mitnehmerteile des Mitnehmers,
- Fig. 6: die zusammengesetzten und miteinander durch eine dämpfende Naht verbundenen Mitnehmerteile des Mitnehmers, und
- Fig. 7: eine Ansicht des Mitnehmers der Fig. 6 von der gegenüber der Darstellung in der Fig. 6 gegenüberliegenden Seite bei einer mit dem Mitnehmerkörper verbundenen Blattfeder des Mitnehmers.

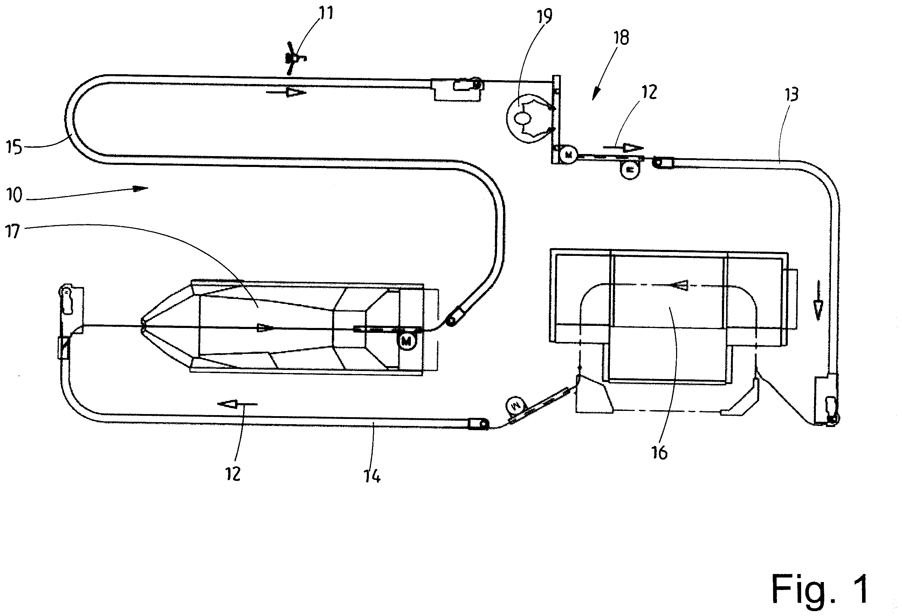

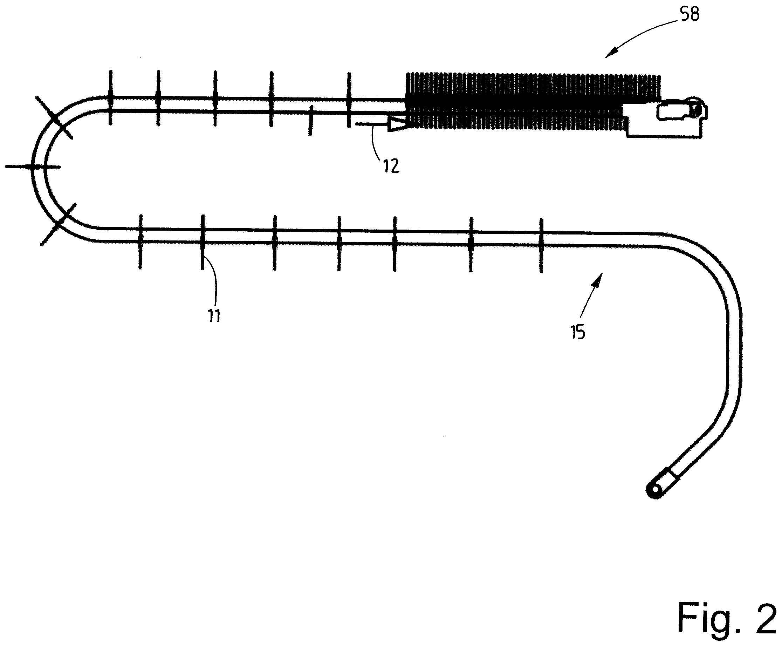

Die Fig. 1 und 2 zeigen exemplarisch eine mögliche Förderstrecke 10 der Vorrichtung. Entlang der Förderstrecke 10 sind an Trägern 11 hängende textile Gegenstände, und zwar vorzugsweise sogenannte Formteile wie zum Beispiel Bekleidungsstücke, Berufsbekleidungsstücke oder dergleichen zu unterschiedlichen Arbeitsstationen, Bearbeitungsstationen und/oder Behandlungsstationen transportierbar. In den Fig. 1 und 2 sind nur die Träger 11 dargestellt, die beispielsweise als ein- und ausklappbare Bügelarme und/oder Hosenklammern aufweisende Transportbügel ausgebildet sein können. Auf oder an die Träger 11, insbesondere Transportbügel, gehängte textile Gegenstände, wie vor allem Bekleidungsstücke, sind in den Figuren nicht dargestellt.

Beim Ausführungsbeispiel der Fig. 1 weist die Förderstrecke 10 drei Förderstreckenabschnitte 13, 14 und 15 auf. Die Erfindung ist nicht auf die in der Fig. 1 gezeigte Förderstrecke 10, insbesondere deren Verlauf, eingeschränkt. Die Förderstrecke 10 kann beliebige Verläufe aufweisen. Auch kann die Förderstrecke 10 mehr oder weniger als drei Förderstreckenabschnitte 13 bis 15 aufweisen.

Beim Ausführungsbeispiel der Fig. 1 dient der erste Förderstreckenabschnitt 13 der Förderstrecke 10 dazu, zu behandelnde Bekleidungsstücke zu einem Tunnelfinisher 16 zum Glätten der Bekleidungsstücke zu transportieren. Im Tunnelfinisher 16 geglättete Bekleidungsstücke werden längs des zweiten Förderstreckenabschnitts 14 vom Tunnelfinisher 16 zu einer Faltmaschine 17 transportiert. Vor oder am Anfang der Faltmaschine 17 werden die gefinishten Bekleidungsstücke vorzugsweise automatisch vom jeweiligen Träger 11 abgenommen. Die leeren Träger 11 werden dann längs des dritten Förderabschnitts 15 von der Faltmaschine 17 zu einer Beladestation 18 transportiert, wo sie wieder mit zu behandelnden (anderen) Bekleidungsstücken beschickt werden. Im gezeigten Ausführungsbeispiel geschieht das durch eine Person 19 oder gegebenenfalls mehrere Personen. Eventuell können die Träger 11 an der Beladestation 18 auch automatisch mit Bekleidungsstücken beschickt werden. Von der Beladestation 18 werden die wieder mit zu behandelnden Bekleidungsstücken beschickten Träger 11 nacheinander dem Anfang des Förderstreckenabschnitts 13 zugeführt.

Längs der in der Fig. 1 beispielhaft gezeigten Förderstrecke 10 werden sowohl mit Bekleidungsstücken beladene als auch leere Träger 11 in Transportrichtung 12 im Kreislauf geführt. In der Darstellung der Fig. 1 erfolgt der Transport der Träger 11 im Uhrzeigersinnrichtung. Demzufolge verläuft auch die Transportrichtung 12 im Uhrzeigersinn. Hierauf ist die Erfindung aber nicht beschränkt.

Die Erfindung eignet sich auch für Förderstrecken, die keinen geschlossenen Kreislauf bilden und auch für Förderstrecken, die nicht Tunnelfinisher 16 und Faltmaschinen 17 miteinander verknüpfen, sondern dazu dienen, Trägern 11 zugeordnete Bekleidungsstücke oder sonstige textile Gegenstände zu mindestens einer anderen Wäschereimaschine und/oder von dieser weg zu transportieren oder beliebige andere Wäschereimaschinen, auch mehr als zwei Wäschereimaschinen, miteinander zu verknüpfen.

Die Förderstrecke 10 ist gebildet aus mindestens einem Stetigförderer. Im gezeigten Ausführungsbeispiel, bei dem die Förderstrecke 10 drei Förderstreckenabschnitte 13, 14 und 15 aufweist, ist jeder Förderstreckenabschnitt 13, 14 und 15 aus einem eigenen, vorzugsweise eigenständigen, Stetigförderer gebildet.

Der oder der jeweilige Stetigförderer der Förderstrecke 10 bzw. der Förderstreckenabschnitte 13, 14 und 15 verfügt über einen Tragstrang 20 und einen parallel mit geringem Abstand über denselben sich erstreckenden Förderstrang 21. Jeder Tragstrang 20 und jeder Förderstrang 21 verlaufen parallel übereinander längs der Transportrichtung 12 entlang der Förderstrecke 10 bzw. ihrer Förderstreckenabschnitte 13, 14 und 15. Sowohl der Tragstrang 20 als auch der Förderstrang 21 sind stationär unter einer Decke der Wäscherei und/oder an auf dem Boden der Wäscherei befestigten Säulen angeordnet. Dabei entspricht der Verlauf des jeweiligen Tragstrangs 20 und des diesem zugeordneten Fördererstrangs 21 dem Verlauf der Förderstrecke 10 bzw. der Förderstreckenabschnitte 13, 14 und 15.

Der jeweilige Tragstrang 20 kann im einfachsten Falle als ein Rohr mit vorzugsweise rundem Querschnitt ausgebildet sein, aber auch über einen profilierten Querschnitt verfügen, der nicht zwingend rohrförmig ausgebildet sein muss. Entscheidend ist, dass der jeweilige Tragstrang 20 so ausgebildet bzw. profiliert ist, dass am jeweiligen vorzugsweise horizontal verlaufenden Tragstrang 20 die Träger 11, und zwar sowohl beladene als auch unbeladene Träger 11, mit ihren oberen Haken 22 entlanggleiten können. Dazu sind die Träger 11 mit den Haken 22 an dem jeweiligen Tragstrang 20 angehängt oder auf den jeweiligen Tragstrang 20 aufgehängt. Auf diese Weise hängen die Träger 11 von ihren Haken 22 am jeweiligen Tragstrang 20 herunter, wobei die zu behandelnden und weiterzutransportierenden Bekleidungsstücke wiederum vom jeweiligen Träger 11 herunterhängen.

Der jeweilige Förderstrang 21 der Förderstrecke 10 bzw. des jeweiligen Förderstreckenabschnitts 13, 14 und 15 verfügt über einen stationären Gleitstrang 23 und eine umlaufend antreibbare Förderkette 24. Die Förderkette 24 läuft am oder im Gleitstrang 23 entlang und wird dabei vom Gleitstrang 23 geführt. Im gezeigten Ausführungsbeispiel ist die Förderkette 24 als Rollenkette mit durch Bolzen und darauf gelagerte Hülsen gelenkig verbundenen Kettengliedern 26 ausgebildet. Die Förderkette 24 ist im gezeigten Ausführungsbeispiel so ausgerichtet, dass ihre die einzelnen Kettenglieder 26 verbindenden Bolzen 25 senkrecht verlaufen. Dadurch sind die Kettenglieder 26 der Förderkette 24 stehend dem Gleitstrang 23 zugeordnet.

Mit der Förderkette 24 des Förderstrangs 21 sind in gleichen Abständen aufeinanderfolgende Mitnehmer 27 verbunden. Alle Mitnehmer 27 sind gleich ausgebildet. Jeder Mitnehmer 27 ist beweglich mittels eines Befestigungswinkels 28 mit einem Kettenglied 26 der Förderkette 24 verbunden. Im gezeigten Ausführungsbeispiel trägt nicht jedes Kettenglied 26 einen Mitnehmer 27, sondern nur jedes fünfte Kettenglied 26. Hierauf soll die Erfindung aber nicht beschränkt sein. Der Abstand aufeinanderfolgender gleicher Mitnehmer 27 kann eine größere oder auch kleinere Anzahl von Kettengliedern 26 betragen.

Jeder Befestigungswinkel 28 ist mit einem kürzeren Schenkel unter dem betreffenden Kettenglied 26 der Förderkette 24 befestigt, beispielsweise mit beiden parallelen beabstandeten Bolzen 25 des jeweiligen Kettenglieds 26. Mit einem unterhalb der Förderkette 24 sich erstreckenden längeren Schenkel jedes Befestigungswinkels 28 ist ein jeweiliger unter der Förderkette 24 angeordneter Mitnehmer 27 beweglich verbunden. Dazu verfügt im gezeigten Ausführungsbeispiel der in Transportrichtung 12 ausgerichtete und in einer vertikalen Ebene liegende längere Schenkel jedes Befestigungswinkels 28 über zwei beabstandeten Tragbolzen 29. Beide Tragbolzen 29 stehen von der gleichen Seite des längeren Schenkels des Befestigungswinkels 28 vor, und zwar horizonalgerichtet und quer zur Transportrichtung 12 verlaufend. Alternativ können die Befestigungswinkel 28 auch im Querschnitt U-förmig ausgebildet sein mit zwei parallelen senkrechten längeren Schenkeln, zwischen denen ein hinterer Teil des jeweiligen Mitnehmers 27 befestigt ist. Dann erstrecken sich die beiden Tragbolzen 29 für den jeweiligen Mitnehmer 27 horizontalgerichtet vom einen längeren vertikalen Schenkel zum hiervon beabstandeten, benachbarten längeren Schenkel.

Jeder der gleich ausgebildeten Mitnehmer 27 verfügt über einen Mitnehmerkörper 30 aus zwei Mitnehmerteilen 31 und 32 sowie eine diese verbindende dämpfende Naht 33. Außerdem verfügt der hier gezeigte Mitnehmer 27 noch über eine Feder 34. Der Mitnehmer 27 kann auch aus mehr als zwei Mitnehmerteilen 31 und 32 bestehen. Ebenso kann der Mitnehmer 27 über mehr als eine die Mitnehmerteile verbindende dämpfen Naht 33 verfügen. Auch kann der Mitnehmer 27 über mehrere gegebenenfalls unterschiedliche Federn verfügen.

Der Mitnehmerkörper 30 ist nach Art einer aufrechten Platte ausgebildet. Demzufolge verfügt der Mitnehmerkörper 30 in zwei parallelen, aufrechten Ebenen liegende Seitenflächen, die eine Vorderseite 45 und eine Rückseite 36 bilden. Beim gezeigten Mitnehmerkörper 30 sind in der Vorderseite 35 und in der Rückseite 36 gegenüberliegende Vertiefungen 37 zur Materialreduzierung vorgesehen. Der Mitnehmerkörper 30 ist umgeben von einem Rand 30, der im gezeigten Ausführungsbeispiel durch Spalte 39 und Schlitze 40, 41 sowie 42 unterbrochen ist.

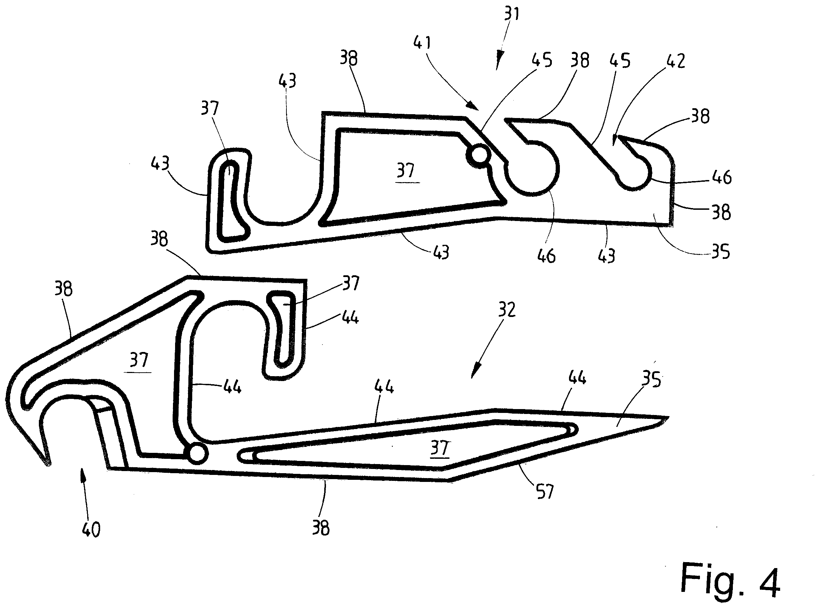

Die beiden Mitnehmerteile 31 und 32 sind gleich breit, weisen aber unterschiedliche Grundflächen auf (Fig. 4). Die Grundflächen der Mitnehmerteile 31 und 32 sind so aufgeteilt, dass benachbarte Innenränder 43, 44, die nicht an der Bildung des äußeren umlaufenden Rands 38 des Mitnehmerkörpers 30 beteiligt sind, bei zusammengesetzten Mitnehmerteilen 31, 32 nicht aneinander anliegen, sondern gleichermaßen voneinander beabstandet sind zur Bildung des Spalts 39 zwischen den Mitnehmerteilen 31, 32. Der Spalt 39 wird so vom Innenrand 43 des Mitnehmerteils 31 und vom Innenrand 44 des Mitnehmerteils 32 begrenzt. Der Spalt 39 weist eine Breite auf, die bevorzugt der größten Dicke des Mitnehmerkörpers 30 entspricht. Es ist aber denkbar, dass die Breite des Spalts 39 um bis zu 40%, insbesondere bis zu 25%, größer oder kleiner ist als die maximale Dicke des Mitnehmerkörpers 30.

Der Spalt 39 verläuft durchgehend zwischen unterschiedlichen Abschnitten des äußeren Rands 39 des Mitnehmerkörpers 30. Im gezeigten Ausführungsbeispiel geht der Spalt 39 aus von einem oberseitigen, vorzugsweise geraden Abschnitt des Rands 38 des Mitnehmerkörpers 30 und endet in einem auch vorzugsweise geraden seitlichen Abschnitt des Rands 38 des Mitnehmerkörpers 30. Dieser vorzugsweise etwa senkrecht oder leicht schräggerichtete Abschnitt des Rands 38 befindet sich auf derjenigen Seite des Mitnehmerkörpers 30, der die beiden beabstandeten Schlitze 40 und 41 zugeordnet sind.

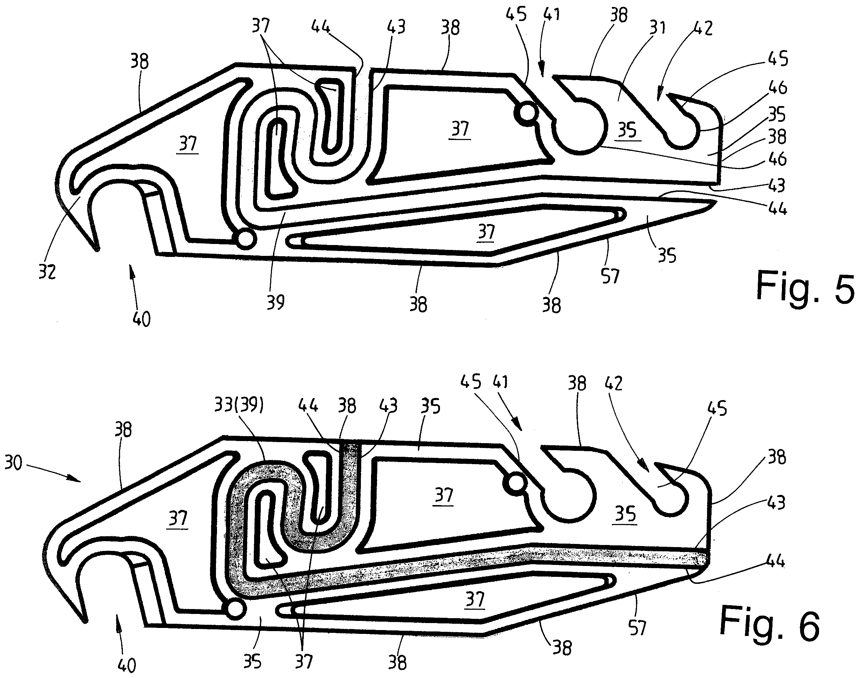

Beim hier gezeigten Mitnehmer 27 verläuft der Spalt 39 nicht auf dem kürzesten Wege vom einen Abschnitt zum anderen Abschnitt des Rands 38 des Mitnehmerkörpers 30, sondern schlangenlinien- und/oder mäanderförmig. Dadurch wird die Länge des Spalts 39 im Mitnehmerkörper 30 vergrößert. Beim gezeigten Mitnehmer 27 (Fig. 6) verfügt der Spalt 39 ausgehend vom oberen und etwa horizontal gerichteten Abschnitt des Rands 38 des Mitnehmerkörpers 30 über einen etwa S-förmig geschlängelten Teil. Daran schließt sich ein im gezeigten Ausführungsbeispiel etwas abgeknickter gerader Bereich des Spalts 39 an, der in einem etwa senkrechten seitlichen Abschnitt des Rands 38 des Mitnehmerkörpers 30 endet. Dieser etwas abgeknickte längliche Teil des Spalts 39 ist etwa so lang wie der S-förmige anfängliche Teil bzw. Bereich des Spalts 39.

Die beiden zusammengesetzten Mitnehmerkörper 30 (Fig. 5) sind im gezeigten Ausführungsbeispiel verbunden durch die einzige dämpfende Naht 33. Diese Verbindung geschieht nach Art einer Stumpfschweißnaht. Diese Stumpfschweißnaht ist nach Art einer I-Naht ausgebildet, die den Spalt 39 vollständig oder zumindest größtenteils ausfüllt und sich durchgehend von der flachen Vorderseite 35 bis zur flachen Rückseite 36 des Mitnehmerkörpers 30 erstreckt. Nach dem Verbinden der Mitnehmerteile 31 und 32 durch die dämpfende Naht 33 entsteht der dauerhaft einteilige Mitnehmerkörper 30, wobei die dämpfende Naht 33 im Bereich des Spalts 39 zur Bildung eines Teils der Vorderseite 35 und der Rückseite 36 des Mitnehmerkörpers 30 beiträgt (Fig. 6).

Der Mitnehmerkörper 30 jedes Mitnehmers 27 ist gebildet aus zwei unterschiedlichen Materialien, insbesondere Kunststoff bzw. Elastomer. Die Mitnehmerteile 31 und 32 sind gleichermaßen aus einem thermoplastischen Kunststoff, insbesondere Polyamid, gebildet. Demgegenüber ist die dämpfende Naht 33 aus einem Elastomer gebildet, das weicher ist als das Material der Mitnehmerteile 31 und 32. Vorzugsweise handelt es sich beim Material der dämpfenden Naht 33 um ein thermoplastisches Elastomer. Dadurch sind die Mitnehmerteile 31 und 32 ebenso wie die dämpfende Naht 33 im Spritzgussverfahren herstellbar, und zwar bevorzugt durch Zwei-Komponenten-Spritzguss. Hierbei werden zuerst die Mitnehmerteile 31 und 32 gegebenenfalls in der gleichen Form gespritzt und anschließend die dämpfende Naht 33 zwischen die entsprechend relativ zueinander unter Bildung des Spalts 39 angeordneten Mitnehmerteile 31 und 32 gespritzt, wodurch es zur dauerhaften Verbindung der Mitnehmerteile 31 und 32 durch die dämpfende Naht 33 und zum einteiligen Mitnehmerkörper 30 aus thermoplastischem Material kommt.

Infolge der Bildung der dämpfenden Naht 33 aus einem Elastomer, insbesondere thermoplastischem Elastomer, ist diese weicher als der Kunststoff, aus dem die Mitnehmerteile 31, 32 gebildet sind. Infolge dessen wirkt die dämpfende Naht 33 schall- und/oder schwingungsdämpfend. Das hat zur Folge, dass die beiden Mitnehmerteile 31 und 32 schwingungstechnisch und/oder akustisch voneinander getrennt sind und dadurch Schall und/oder Schwingungen von einem Mitnehmerteil 31 bzw. 32 nicht oder nicht nennenswert auf das andere Mitnehmerteil 31 bzw. 32 übertragen werden können. Infolge dessen erfolgt durch die Mitnehmer 27 keine oder zumindest eine deutlich verringerte Geräuschübertragung vom Tragstrang 20 auf den Förderstrang 21 und umgekehrt. Insbesondere bilden die Mitnehmer 27 keine Schall- und Schwingungsbrücken zwischen dem Tragstrang 20 und dem Förderstrang 21 der Förderstrecke 10 bzw. des jeweiligen Förderstreckenabschnitts 13, 14 und 15.

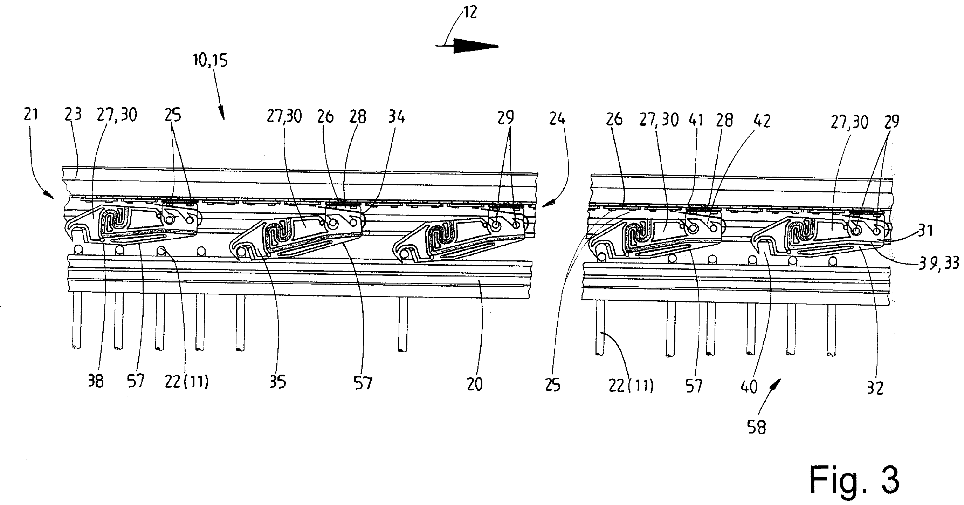

Einem verjüngten Endbereich des Mitnehmers 27 ist der Schlitz 40 im Mitnehmerkörper 30 zugeordnet. Zur Unterseite des Mitnehmerkörpers 30 ist der Schlitz 40 offen, indem er hier den Rand 38 des Mitnehmerkörpers 30 unterbricht. Der längliche Schlitz 40 verläuft beim hier gezeigten Mitnehmer 27 leicht gegenüber einer Vertikalen, und zwar um 10° bis 30°, insbesondere 15°. Diese Neigung ist derart, dass der Schlitz 40 ausgehend von seinem offenen Ende zum geschlossenen, etwa halbkreisförmigen Ende nach außen, also zum verjüngten Ende des Mitnehmers 27 hin, verläuft. Der Schlitz 40 hat eine Breite, die etwas größer ist als der Durchmesser der Haken 22 der Träger 11. Dadurch kann der Schlitz 40 des jeweiligen Mitnehmers 27 an den jeweiligen Träger 11 angekoppelt werden, indem in den Schlitz 40 der Haken 22 des jeweiligen Trägers 11 eingreift bzw. der Schlitz 40 den Haken 22 von oben her teilweise umgreift (Fig. 3). Dabei verläuft die Ebene des Trägers 11 quer zur Ebene des jeweiligen Mitnehmers 27.

Am dem Schlitz 40 gegenüberliegenden Endbereich des Mitnehmers 27 sind die beiden parallelen und etwas beabstandeten Schlitze 41 und 42 angeordnet. Beide Schlitze 41 und 42 gehen aus von einem oberen, vorzugsweise geradlinigen und/oder horizontalen Abschnitt des umlaufenden, aber von den Schlitzen 40, 41 und 42 unterbrochenen Rands 38 des Mitnehmerkörpers 30. Die Schlitze 41 und 42 sind dem Mitnehmerteil 31 zugeordnet im Gegensatz zum Schlitz 40, der dem Mitnehmerteil 32 zugeordnet ist.

Beide Schlitze 41, 42 verlaufen parallel zueinander unter einem Winkel von etwa 45°. Der Winkel kann um bis zu 30° größer oder kleiner sein. Die Neigung der Schlitze 41 und 42 ist derart, dass ihre geschlossenen Enden in Richtung zum benachbarten vertikalen Abschnitt des Rands 38 weisen. Die Schlitze 41 und 42 weisen einen oberen, vom etwa horizontalen Abschnitt des Rands 38 des Mitnehmerkörpers 30 ausgehenden Anfangsabschnitt 45 auf. Der Anfangsabschnitt 45 jedes Schlitzes 41 und 42 verfügt gleichermaßen über eine Breite, die etwas kleiner ist als der Durchmesser der Tragbolzen 29, womit der jeweilige Mitnehmer 27 unter Einbeziehung des Befestigungswinkels 28 an einem Kettenglied 26 der Förderkette 24 befestigt ist. Die Breite jedes Anfangsabschnitts 45 ist derart geringer als die gleichen Durchmesser der Tragbolzen 29, dass jeder Mitnehmer 29 auf die beiden ihm zugeordneten gleichen Tragbolzen 29 rastend aufsteckbar ist unter elastischer Aufweitung der Schlitze 41 und 42. Dadurch ist eine einfache, werkzeuglose Befestigung des jeweiligen Mitnehmers 27 mit seinen Schlitzen 41 und 42 auf den beiden Tragbolzen 29 am Befestigungswinkel 28 des jeweiligen Kettenglied 26 der Förderkette 21 möglich. Dabei sind durch das Aufstecken der Mitnehmer 27 mit den Schlitzen 41 und 42 auf die Tragbolzen 29 die Mitnehmer 27 so auf den Tragbolzen 29 fixiert, dass sie sich selbsttätig von diesen nicht mehr lösen können.

Ein auf den Anfangsabschnitt 45 jedes Schlitzes 41 und 42 folgender Endabschnitt verfügt jeweils über eine zylindrische Aufweitung 46. Die zylindrische Aufweitung 46 des vorderen Schlitzes 41 ist größer als diejenige des hinteren Schlitzes 42. Die zylindrische Aufweitung 46 ist nur so viel größer als der Durchmesser des ihr zugeordneten Tragbolzens 29, das der jeweilige Mitnehmer 27 um den Tragbolzen 29 in der zylindrischen Aufweitung 46 am geschlossenen Ende des Schlitzes 42 drehbar ist um die Längsmittelachse des Tragbolzens 29. Hingegen ist die zylindrische Aufweitung 46 am Ende des vorderen Schlitzes 41 größer als die zylindrische Aufweitung 46 am Ende des Schlitzes 42. Vorzugsweise ist die zylindrische Aufweitung 46 am Ende des Schlitzes 41 um 30% bis 50% größer als die zylindrische Aufweitung 46 am Ende des Schlitzes 42. Dadurch kann der jeweilige Mitnehmer 27 um den Tragbolzen 29 im hinteren Schlitz 42 in begrenztem Umfange verschwenkt werden, wobei die größere zylindrische Aufweitung 46 am Ende des vordersten Schlitzes 41 den Schwenkweg bzw. Schwenkwinkel des jeweiligen Mitnehmers 27 um den Tragbolzen 29 im hinteren Schlitz 42 bregrenzt.

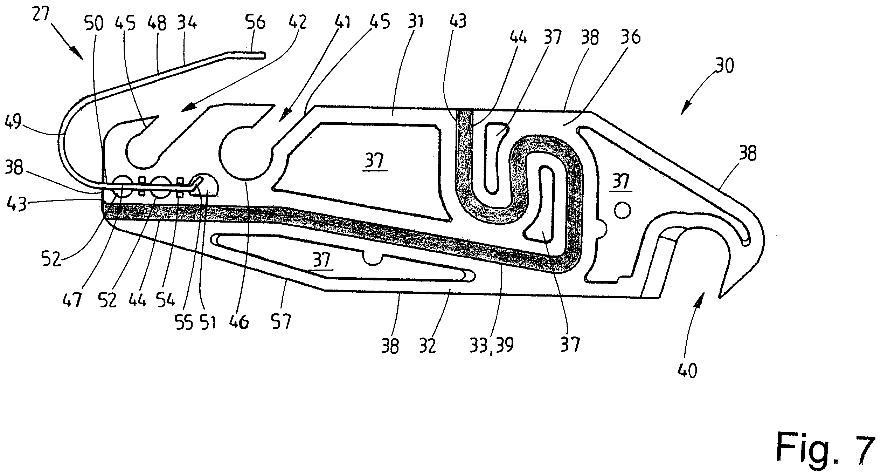

Mit Blick auf die Rückseite 36 ist der komplette Mitnehmer 27 in der Fig. 7 dargestellt. In dieser Figur ist - wie auch in der Fig. 3 - die Feder 34 des Mitnehmers 27 gezeigt. Bei der dargestellten Feder 27 handelt es sich um eine etwa U-förmig vorgebogene Blattfeder. Die Breite der die Feder 34 bildenden Blattfeder ist etwas geringer als die Breite bzw. Dicke der Mitnehmer 27. Mindestens ein Rand der Feder 34 ist gegenüber der Vorderseite 35 des Mitnehmerkörpers 30 geringfügig zurückversetzt, vorzugsweise auch gegenüber der Rückseite 36.

Die als Blattfeder ausgebildete Feder 34 verfügt aufgrund ihrer U-förmigen Vorbiegung über zwei Schenkel 47 und 48, die durch einen halbkreisförmigen Steg 49 einstückig verbunden sind. Die beiden ungleichlangen Schenkel 47 und 48 verlaufen nicht ganz parallel zueinander; vielmehr divergieren sie leicht zu ihren freien Enden hin. Der längere Schenkel 48 und der Steg 49 der als Blattfeder ausgebildeten Feder 34 befinden sich außerhalb des Mitnehmerkörpers 30 des Mitnehmers 27. Hingegen befindet sich der kürzere Schenkel 47 der Feder 34 in einer nur zur Rückseite 36 des Mitnehmerkörpers 30 hin seitlich offenen Nut 50. Zur Vorderseite 34 des Mitnehmerkörpers 30 hin ist die Nut 50 verschlossen, so dass es sich um eine sackartige Nut 50 handelt. Zu einem vertikalen endseitigen Abschnitt des Rands 38 des Mitnehmerkörpers 30 ist die Nut 50 offen. Die Nut 50 ist an ihrem gegenüberliegenden, im Inneren des Mitnehmerteils 31 liegenden Ende mit einer sacklochartigen Aufweitung 51 versehen. Zwischen dieser Aufweitung 51 und dem offenen Ende der Nut 50 befinden sich zwei vorzugsweise gleiche Sacklöcher 52. Die Sacklöcher 52 sind untereinander beabstandet und auch von der Aufweitung 51 sowie dem stirnseitig offenen Ende der Nut 50 beabstandet.

Zwischen zwei benachbarten Sacklöchern 52 und einem Sackloch 52 und der Aufweitung 51 sind auf beiden Seiten neben der Nut 50 kleine Materialanhäufungen 53 vorgesehen, die die zur Rückseite 36 des Mitnehmerkörpers 30 (rückseitig) offene Nut 50 (noch) nicht einschnüren. Im gezeigten Ausführungsbeispiel handelt es sich bei den Materialanhäufungen 53 um vorzugsweise vier gegenüber der Rückseite 36 des Mitnehmerteils 31 des Mitnehmerkörpers 30 vorstehende punktartige Vorsprünge 54.

Nach dem durch die Rückseite 36 des Mitnehmerkörpers 30 her erfolgenden quergerichteten Einschieben der Feder 34 mit ihrem kürzeren Schenkel 47 in die Nut 50 wird die Feder 34 durch seitliches Herausbewegen aus der zur Rückseite 36 hin offenen Nut 50 gesichert durch ein Erweichen und anschließendes plastisches Verformen der Vorsprünge 54. Das kann beispielsweise durch Ultraschallschweißen erfolgen. Auf diese Weise wird die Nut 50 abschnittsweise verschlossen. Zur Sicherung der als Blattfeder ausgebildeten Feder 34 gegen längsgerichtetes Herausziehen aus der Nut 50 verfügt der in die Nut 50 seitlich eingeschobene kürzere Schenkel 47 der Feder 34 über ein abgewinkeltes Ende 55, das sich in der Aufweitung 51 abstützt.

Der über dem Mitnehmerkörper 30 außerhalb desselben liegende lange Schenkel 48 der als Blattfeder ausgebildeten Feder 34 verläuft geringfügig antiparallel zum ihn überlappenden Abschnitt des Rands 38 des Mitnehmerkörpers 30, und zwar so, dass bei unbelasteter Feder 34 der Schenkel 48 zu seinem Ende hin sich im Abstand zum Rand 38 vergrößert. Ein vom freien Ende des längeren Schenkels 48 ausgehender kurzer Endbereich desselben ist in Richtung zum Rand 38 des Mitnehmerkörpers 30 etwas abgeknickt, so dass sich dieser Endbereich 56 zum freien Ende des längeren Schenkels 48 hin dem Rand 38 des Mitnehmerkörpers 30 wieder nähert. Dadurch wird ein Verhaken des Endes bzw. Endbereichs 56 des über dem Mitnehmerkörper 30 freiliegenden längeren Schenkels 48 der Feder 34 am Gleitstrang 23 des Förderstrangs 21 verhindert.

Die Funktionsweise der Vorrichtung, insbesondere der Mitnehmer 27 derselben, wird nachfolgend unter Bezugnahme auf die Fig. 3 erläutert:
Diese Figur zeigt Teile eines Abschnitts der Förderstrecke 10, beispielsweise des Förderstreckenabschnitts 15. Die an der Förderkette 24 befestigten Mitnehmer 27 werden von der umlaufend angetriebenen Förderkette 24 in Transportrichtung 12 weiterbewegt.

Am Anfang der Förderstrecke 10 befinden sich mehrere dicht aufeinanderfolgende Träger 11, die beladen oder unbeladen sein können. Über die dicht aufeinanderfolgenden Träger 11 gleiten die in Transportrichtung 12, also in Bezug auf die Darstellung der Fig. 3 von links nach rechts, weiterbewegten Mitnehmer 27 in um den Tragbolzen 29 im Schlitz 42 unter Vorspannung der als Blattfeder ausgebildeten Feder 34 hochgeschwenkten Zustand über die Haken 22 der ersten Träger 11 hinweg. Dabei stützen sich die Mitnehmer 27 mit einem von ihrem hakenartigen Schlitz 40 ausgehenden unteren Teil des Rands 38 der Mitnehmerkörper 30 auf den Haken 22 ab. Dieser untere Teil des Rands 38 der Mitnehmerkörper 30 bildet eine Hubschräge 57 unter den Mitnehmern 27, die zum Hochschwenken der Mitnehmer 27 führt und ein gleitendes Hinüberbewegens der Mitnehmer 27 über die auf dem Tragstrang 20 hängenden Haken 22 der dicht aufeinanderfolgenden Träger 11 zulässt. In diesem hochgeschwenkten Zustand kann der hakenartige Schlitz 40 am hinteren Ende der Mitnehmer 23 noch nicht in Eingriff mit dem Haken 22 der dicht aufeinanderfolgenden Träger gelangen.

Wenn ein Mitnehmer 27 über die dicht aufeinanderfolgenden Träger 11 hinwegbewegt ist und sich die Hubschräge 57 auf keinen Haken 22 eines Trägers 11 mehr abstützt, wird von der vorgespannten Feder 34 der betreffende Mitnehmer 27 mit seinem den hakenartigen Schlitz 40 aufweisenden rückseitigen Ende nach unten geschwenkt. Dadurch kann der hakenartige Schlitz 40 an der Rückseite des betreffenden Mitnehmers 27 Haken 22 des in Transportrichtung 12 gesehen letzten Trägers 11 des Pakets dicht aufeinanderfolgender Träger 11 einhaken. Dieser Träger 11 wird jetzt vom mit ihm verhakten Mitnehmer 27 in Transportrichtung 12 längs der Förderstrecke 10 mitgenommen und dadurch weitertransportiert.

Am Ende des Förderstreckenabschnitts 15 der Förderstrecke 10 befindet sich ein Speicher 58 mit wiederum dicht aufeinanderfolgenden Trägern 11. Hier wird der betreffende Mitnehmer 27 vom Haken 22 desselben wieder gelöst, sobald der Träger 11 mit oder ohne ein daran hängendes Bekleidungsstück bis vor den letzten der im Speicher 58 dicht aufeinanderfolgenden Träger 11 transportiert worden ist. Dadurch ist der Weitertransport dieses Trägers 11 in Transportrichtung 12 beendet. Dieses Lösen oder Trennen des Mitnehmers 27 vom Haken 22 erfolgt durch Hochschwenken des Mitnehmers 27 um den Tragbolzen 29 im Schlitz 42 am vorderen Ende des Mitnehmers 27 im Uhrzeigersinn. Dabei wird das den hinteren Schlitz 40 aufweisende Ende des Mitnehmers 27 hochbewegt und dabei die Feder 34 wieder vorgespannt. Erzeugt wird diese Schwenkbewegung des Mitnehmers durch ein Entlanggleiten der Hubschräge 57 des schrägen unteren Abschnitts des Rands 38 des Mitnehmerkörpers 30 über den Haken 22 des in Transportrichtung 12 gesehen nachfolgenden Trägers 12 im Speicher 58. Im hochgeschwenkten Zustand gleitet dann der Mitnehmer 27 über alle Haken 22 der Träger 12 im Speicher 58 hinweg, bis der betreffende Mitnehmer 27 mit seinem hakenartigen Schlitz 40 wieder an den in Transportrichtung 12 gesehen letzten Träger 11 im Speicher 58 angekoppelt wird, indem er mit dem hakenartigen Schlitz 40 an seiner Rückseite den Haken 22 des letzten Trägers 11 des Pakets dicht beieinanderliegender Träger 11 wieder von oben übergreift, also der Haken 22 des betreffenden Trägers 11 und der hakenartige Schlitz 40 des entsprechenden Mitnehmers 37 ineinander eingehakt worden sind.

### Bezugszeichenliste:

| | | | |
|---|---|---|---|
| 10 | Förderstrecke | 42 | Schlitz |
| 11 | Träger | 43 | Innenrand |
| 12 | Transportrichtung | 44 | Innenrand |
| 13 | Förderstreckenabschnitt | 45 | Anfangsabschnitt |
| 14 | Förderstreckenabschnitt | 46 | zylindrische Aufweitung |
| 15 | Förderstreckenabschnitt | 47 | Schenkel |
| 16 | Tunnelfinisher | 48 | Schenkel |
| 17 | Faltmaschine | 49 | Steg |
| 18 | Beladestation | 50 | Nut |
| 19 | Person | 51 | Aufweitung |
| 20 | Tragstrang | 52 | Sackloch |
| 21 | Förderstrang | 53 | Materialanhäufung |
| 22 | Haken | 54 | Vorsprung |
| 23 | Gleitstrang | 55 | abgewinkeltes Ende |
| 24 | Förderkette | 56 | Endbereich |
| 25 | Bolzen | 57 | Hubschräge |
| 26 | Kettenglied | 58 | Speicher |
| 27 | Mitnehmer | | |
| 28 | Befestigungswinkel | | |
| 29 | Tragbolzen | | |
| 30 | Mitnehmerkörper | | |
| 31 | Mitnehmerteil | | |
| 32 | Mitnehmerteil | | |
| 33 | dämpfende Naht | | |
| 34 | Feder | | |
| 35 | Vorderseite | | |
| 36 | Rückseite | | |
| 37 | Vertiefung | | |
| 38 | Rand | | |
| 39 | Spalt | | |
| 40 | Schlitz | | |
| 41 | Schlitz | | |

## Patentansprüche

1. Vorrichtung zum Transport von an Trägern (11) hängenden textilen Gegenständen, vorzugsweise Bekleidungsstücken, mit einer Förderstrecke (10), die mindestens einen Tragstrang (20), an dem die Träger (11) in Transportrichtung (12) der Förderstrecke (10) entlangbewegbar sind und wenigstens einen in Transportrichtung (12) antreibbaren Förderstrang (21) aufweist, und mit am Förderstrang (21) beabstandet angeordnete Mitnehmer (27), wobei einzelne Mitnehmer (27) gezielt an am Tragstrang (20) in Transportrichtung (12) entlang zu bewegende Träger (11) ankoppelbar sind, **dadurch gekennzeichnet, dass** die Mitnehmer (27) Mitnehmerkörper (30) aufweisen, die aus mehreren durch eine dämpfende Naht (33) verbundene Mitnehmerteile (31, 32) gebildet sind, derart, dass nach dem Verbinden der Mitnehmerteile (31, 32) durch die dämpfende Naht (33) ein dauerhaft einteiliger Mitnehmerkörper (30) entsteht, wobei die dämpfende Naht (33) im Bereich eines Spalts (39) zur Bildung eines Teils einer Vorderseite (35) und einer Rückseite (36) des Mitnehmerkörpers (30) beiträgt.

2. Vorrichtung nach Anspruch 1, **dadurch gekennzeichnet, dass** die Mitnehmerteile (31, 32) und die diese verbindende dämpfende Naht (33) etwa eine gleiche Dicke aufweisen zur Bildung der bündigen Vorderseite (35) und Rückseite (36) des Mitnehmerkörpers (30).

3. Vorrichtung nach Anspruch 1 oder 2, **dadurch gekennzeichnet, dass** beidseitig die oder die jeweilige dämpfende Naht (33) begrenzenden korrespondierenden Innenrändern (43, 44) der Mitnehmerteile (31, 32) einen solchen, vorzugsweise gleichartigen, Verlauf aufweisen, dass zwischen den die jeweilige dämpfende Naht (33) begrenzenden Innenränder (43, 44) der Mitnehmerteile (31, 32) der über die gesamte Länge der dämpfenden Naht (33) durchgehender, vorzugsweise gleich großer und/oder gleich breiter, Spalt (39) entsteht.

4. Vorrichtung nach Anspruch 3, **dadurch gekennzeichnet, dass** die dämpfende Naht (33) und/oder der Spalt (39) sich durchgehend zwischen den gegenüberliegenden, korrespondierenden Innenrändern (43, 44) der Mitnehmerteile (31, 32) des jeweiligen Mitnehmerkörpers (30) erstrecken.

5. Vorrichtung nach Anspruch 3 oder 4, **dadurch gekennzeichnet, dass** die dämpfende Naht (33) des jeweiligen Mitnehmerkörpers (30) einen geschlängelten und/oder mäanderförmigen Verlauf aufweist.

6. Vorrichtung nach einem der Ansprüche 3 bis 5, **dadurch gekennzeichnet, dass** der eine Spalt (39) zwischen den Mitnehmerteilen (31, 32) des Mitnehmerkörpers (30) ganz oder zumindest größtenteils vom Material der dämpfenden Naht (33) ausgefüllt ist.

7. Vorrichtung nach einem der vorhergehenden Ansprüche, **dadurch gekennzeichnet, dass** die dämpfende Naht (33) aus einem Elastomer gebildet ist, welches weicher ist als das Material der Mitnehmerteile (31, 32), vorzugsweise die Mitnehmerteile (31, 32) gleichermaßen aus thermoplastischem Kunststoff, insbesondere Polyamid, gebildet sind.

8. Vorrichtung nach mindestens einem der Ansprüche 1 bis 7, wobei die Mitnehmer (27) auf mindestens einen mit dem Förderstrang (21) in Verbindung stehenden Tragbolzen (29) gelagert sind, **dadurch gekennzeichnet, dass** jeder Mitnehmer (27) rastend an mindestens einem Tragbolzen (29) befestigbar ist.

9. Vorrichtung nach Anspruch 8, **dadurch gekennzeichnet, dass** die Mitnehmer (27) mindestens einen einseitig offenen Schlitz (41, 42) aufweisen, der in einem vom offenen Ende ausgehenden Anfangsabschnitt (45) derart schmaler gegenüber dem Durchmesser des ihm zugeordneten Tragbolzens (29) ist, dass der Mitnehmer (27) rastend auf dem mindestens einen Tragbolzen (29) aufsteckbar ist.

10. Vorrichtung nach Anspruch 9, **dadurch gekennzeichnet, dass** sich ein an den Anfangsabschnitten (45) anschließender, endseitig geschlossener Endabschnitt des mindestens einen Schlitzes (41, 42) breiter ist als der Anfangsabschnitt (45), vorzugsweise der jeweilige Endabschnitt als eine zylindrische Aufweitung (46) ausgebildet ist und/ oder der jeweilige Mitnehmer (29) bei sich im aufgeweiteten Endbereich des mindestens einen Schlitzes (41, 42) befindenden Tragbolzen (29) um denselben frei verdrehbar und/ oder verschiebbar ist.

11. Vorrichtung nach Anspruch 10, **dadurch gekennzeichnet, dass** jeder Mitnehmer (27) zwei benachbarte und geringfügig voneinander beabstandete Schlitze (41, 42) aufweist, denen jeweils ein eigener Tragbolzen (29) zugeordnet ist, wobei beide Tragbolzen (29) einem gleichen Kettenglied (26) einer Förderkette (24) des Förderstrangs (21) zugeordnet sind bzw. hiermit in Verbindung stehen und/oder der jeweilige Mitnehmer (27), um einen der Tragbolzen (39) verdrehbar und um den anderen Tragbolzen (29) verdrehbar und/oder schwenkbeweglich ist, vorzugsweise begrenzt schwenkbeweglich ist.

12. Vorrichtung nach mindestens einem der Ansprüche 1 bis 11, wobei jeder Mitnehmer (27) mindestens eine Feder (34) zum Bewegen des Mitnehmers (27) gegen einen Träger (11) aufweist, **dadurch gekennzeichnet, dass** die Feder (34) in eine seitlich offene Nut (50) bzw. einen seitlich offenen Schlitz des jeweiligen Mitnehmers (27) einsteckbar ist und die Feder (34) in den Schlitz bzw. die Nut (50) durch plastische Verformung mindestens einer Materialanhäufung (53) bzw. Wulst form- und/oder kraftschlüssig fixiert ist.

13. Vorrichtung nach Anspruch 12, **dadurch gekennzeichnet, dass** die Feder (34) als eine Blattfeder ausgebildet ist, die über ein abgewinkeltes Ende (55) verfügt, mit dem die Blattfeder in den an einer Flachseite des Mitnehmers (27) offenen Schlitz oder die offene Nut (50) quergerichtet einsetzbar ist, wobei die Blattfeder in Längsrichtung durch ihr abgewinkeltes Ende (55) gegen längsgerichtetes Herausziehen aus dem Schlitz bzw. der Nut (50) form- und/oder reibschlüssig gesichert ist.

## Claims

1. Device for transporting textile articles, preferably items of clothing, hanging on carriers (11), having a conveying path (10) which has at least one support section (20) on which the carriers (11) are able to be moved along the conveying path (10) in a transport direction (12), and at least one conveying section (21) which is able to be driven in a transport direction (12), and having entrainment elements (27) which are disposed so as to be spaced apart on the conveying section (21), wherein individual entrainment elements (27) are able to be coupled in a targeted manner to carriers (11) that are to be moved in the transport direction (12) along the support section (20), **characterized in that** the entrainment elements (27) have entrainment element members (30) which are formed by a plurality of entrainment element parts (31, 32) that are connected by a damping seam (33) in such a manner that upon connecting the entrainment element parts (31, 32) a permanently single-piece entrainment element member (30) is created by the damping seam (33), wherein the damping seam (33) in the region of a gap (39) contributes towards forming part of a front side (35) and of a rear side (36) of the entrainment element member (30).

2. Device according to Claim 1, **characterized in that** the entrainment element parts (31, 32) and the damping seam (33) connecting the latter have an approximately identical thickness in order to form the flush front side (35) and rear side (36) of the entrainment element member (30).

3. Device according to Claim 1 or 2, **characterized in that** on both sides the corresponding inner peripheries (43, 44) of the entrainment element parts (31, 32) that delimit the, or the respective, damping seam (33) have such a, preferably identical, profile so that the continuous, preferably identically large and/or identically wide, gap (39) is created over the entire length of the respective damping seam (33) between the inner peripheries (43, 44) of the entrainment element parts (31, 32) that delimit the respective damping seam (33).

4. Device according to Claim 3, **characterized in that** the damping seam (33) and/or the gap (39) extend continuously between the mutually opposite corresponding inner peripheries (43, 44) of the entrainment element parts (31, 32) of the respective entrainment element member (30).

5. Device according to Claim 3 or 4, **characterized in that** the damping seam (33) of the respective entrainment element member (30) has a serpentine and/or meandering profile.

6. Device according to one of Claims 3 to 5, **characterized in that** the one gap (39) between the entrainment element parts (31, 32) of the entrainment element member (30) is completely or at least largely filled by the material of the damping seam (33).

7. Device according to one of the preceding claims, **characterized in that** the damping seam (33) is formed from an elastomer which is softer than the material of the entrainment element parts (31, 32), preferably the entrainment element parts (31, 32) being likewise formed from a thermoplastics material, in particular polyamide.

8. Device according to at least one of Claims 1 to 7, wherein the entrainment elements (27) are mounted on at least one support pin (29) that is connected to the conveying section (21), **characterized in that** each entrainment element (27) is able to be fastened in a latching manner to at least one support pin (29) .

9. Device according to Claim 8, **characterized in that** the entrainment elements (27) have at least one slot (41, 42) which is open on one side and in an initial portion (45) proceeding from the open end is narrower in comparison to the diameter of the support pin (29) assigned thereto in such a manner that the entrainment element (27) is able to be attached to the at least one support pin (29) in a latching manner.

10. Device according to Claim 9, **characterized in that** an end portion of the at least one slot (41, 42), which adjoins the initial portions (45) and is closed on the end side, is wider than the initial portion (45), preferably the respective end portion being designed as a cylindrical enlargement (46), and/or the respective entrainment element (29), when a support pin (29) is situated in the enlarged end region of the at least one slot (41, 42), being freely rotatable and/or displaceable about said support pin (29).

11. Device according to Claim 10, **characterized in that** each entrainment element (27) has two adjacent slots (41, 42) which are spaced apart from one another to a minor degree and each of which is assigned a dedicated support pin (29), wherein both support pins (29) are assigned to, or connected to, an identical chain link (26) of a conveyor chain (24) of the conveying section (21), and/or the respective entrainment element (27) is rotatable about one of the support pins (39) and rotatable and/or pivotable about the other support pin (29), preferably pivotable to a limited extent.

12. Device according to at least one of Claims 1 to 11, wherein each entrainment element (27) has at least one spring (34) for moving the entrainment element (27) towards one carrier (11), **characterized in that** the spring (34) is insertable into a laterally open groove (50) or a laterally open slot of the respective entrainment element (27), and the spring (34) is fixed in the slot or the groove (50) in a form-fitting and/or force-fitting manner due to plastic deformation of at least one material accumulation (53) or bulge.

13. Device according to Claim 12, **characterized in that** the spring (34) is designed as a leaf spring which possesses an angled end (55) by way of which the leaf spring is insertable so as to be directed transversely into the slot, which is open on a flat side of the entrainment element (27), or the open groove (50), wherein the leaf spring by the angled end (55) thereof is secured in a form-fitting and/or friction-fitting manner in the longitudinal direction against longitudinal extraction from the slot or the groove (50).

## Revendications

1. Dispositif pour le transport d'objets textiles suspendus à des supports (11), de préférence de vêtements, avec une voie d'acheminement (10) qui présente au moins une ligne porteuse (20) le long de laquelle les supports (11) peuvent être déplacés dans la direction de transport (12) de la voie d'acheminement (10), et au moins une ligne d'acheminement (21) pouvant être entraînée dans la direction de transport (12), et avec des entraîneurs (27) agencés à distance sur la ligne d'acheminement (21), des entraîneurs individuels (27) pouvant être couplés de manière ciblée à des supports (11) à déplacer le long de la ligne porteuse (20) dans la direction de transport (12), **caractérisé en ce que** les entraîneurs (27) présentent des corps d'entraîneur (30) qui sont formés de plusieurs parties d'entraîneur (31, 32) reliées par un joint amortissant (33), de telle sorte qu'après la liaison des parties d'entraîneur (31, 32) par le joint amortissant (33), un corps d'entraîneur (30) durablement d'une seule pièce est obtenu, le joint amortissant (33) contribuant, dans la zone d'une fente (39), à former une partie d'un côté avant (35) et d'un côté arrière (36) du corps d'entraîneur (30).

2. Dispositif selon la revendication 1, **caractérisé en ce que** les parties d'entraîneur (31, 32) et le joint amortissant (33) qui les relie présentent approximativement une même épaisseur pour former le côté avant (35) et le côté arrière (36) affleurants du corps d'entraîneur (30).

3. Dispositif selon la revendication 1 ou 2, **caractérisé en ce que,** de part et d'autre, les bords intérieurs (43, 44) correspondants des parties d'entraîneur (31, 32) délimitant le joint amortissant ou le joint amortissant respectif (33) présentent un tracé, de préférence identique, tel qu'entre les bords intérieurs (43, 44) des parties d'entraîneur (31, 32) délimitant le joint amortissant (33) respectif, il se forme la fente (39) continue, de préférence de même taille et/ou de même largeur, sur toute la longueur du joint amortissant (33).

4. Dispositif selon la revendication 3, **caractérisé en ce que** le joint amortissant (33) et/ou la fente (39) s'étendent en continu entre les bords intérieurs opposés correspondants (43, 44) des parties d'entraîneur (31, 32) du corps d'entraîneur respectif (30).

5. Dispositif selon la revendication 3 ou 4, **caractérisé en ce que** le joint amortissant (33) du corps d'entraîneur respectif (30) présente un tracé sinueux et/ou en méandres.

6. Dispositif selon l'une quelconque des revendications 3 à 5, **caractérisé en ce que** la fente (39) entre les parties d'entraîneur (31, 32) du corps d'entraîneur (30) est entièrement ou au moins en grande partie remplie par le matériau du joint amortissant (33) .

7. Dispositif selon l'une quelconque des revendications précédentes, **caractérisé en ce que** le joint amortissant (33) est formé d'un élastomère qui est plus souple que le matériau des parties d'entraîneur (31, 32), de préférence les parties d'entraîneur (31, 32) sont également formées de matière thermoplastique, notamment de polyamide.

8. Dispositif selon au moins l'une quelconque des revendications 1 à 7, les entraîneurs (27) étant montés sur au moins un boulon porteur (29) en liaison avec la ligne d'acheminement (21), **caractérisé en ce que** chaque entraîneur (27) peut être fixé par encliquetage sur au moins un boulon porteur (29).

9. Dispositif selon la revendication 8, **caractérisé en ce que** les entraîneurs (27) présentent au moins une fente (41, 42) ouverte d'un côté, qui est plus étroite dans une section initiale (45) partant de l'extrémité ouverte par rapport au diamètre du boulon porteur (29) qui lui est associé, de telle sorte que l'entraîneur (27) peut être enfiché par encliquetage sur l'au moins un boulon porteur (29) .

10. Dispositif selon la revendication 9, **caractérisé en ce qu'**une section d'extrémité de l'au moins une fente (41, 42), fermée à l'extrémité, se raccordant aux sections initiales (45), est plus large que la section initiale (45), de préférence la section d'extrémité respective est réalisée sous la forme d'un élargissement cylindrique (46) et/ou l'entraîneur respectif (29), lorsque le boulon porteur (29) se trouve dans la zone d'extrémité élargie de l'au moins une fente (41, 42), peut tourner et/ou coulisser librement autour de celle-ci .

11. Dispositif selon la revendication 10, **caractérisé en ce que** chaque entraîneur (27) présente deux fentes (41, 42) voisines et légèrement espacées l'une de l'autre, auxquelles est associé respectivement un boulon porteur (29) propre, les deux boulons porteurs (29) étant associés à un même maillon (26) d'une chaîne d'acheminement (24) de la ligne d'acheminement (21) ou étant en liaison avec celui-ci et/ou l'entraîneur respectif (27) pouvant tourner autour de l'un des boulons porteurs (39) et pouvant tourner autour de l'autre boulon porteur (29) et/ou étant mobile en pivotement, de préférence étant mobile en pivotement de manière limitée.

12. Dispositif selon au moins l'une quelconque des revendications 1 à 11, chaque entraîneur (27) présentant au moins un ressort (34) pour déplacer l'entraîneur (27) contre un support (11), **caractérisé en ce que** le ressort (34) peut être enfiché dans une rainure (50) ouverte latéralement ou une fente ouverte latéralement de l'entraîneur (27) respectif et le ressort (34) est fixé par complémentarité de forme et/ou à force dans la fente ou la rainure (50) par déformation plastique d'au moins un amas de matière (53).

13. Dispositif selon la revendication 12, **caractérisé en ce que** le ressort (34) est réalisé sous la forme d'un ressort à lame qui dispose d'une extrémité coudée (55) par laquelle le ressort à lame peut être inséré transversalement dans la fente ouverte ou la rainure ouverte (50) sur un côté plat de l'entraîneur (27), le ressort à lame étant bloqué dans la direction longitudinale par son extrémité coudée (55) par complémentarité de forme et/ou par friction contre une extraction longitudinale hors de la fente ou de la rainure (50).
